# EUROPÄISCHE PATENTANMELDUNG

(11) **EP 2 130 885 A1**
(43) Veröffentlichungstag der Anmeldung: **09.12.2009**
(21) Anmeldenummer: 09158444.1
(22) Anmeldetag: 22.04.2009
(51) Int. Cl.: C09J 7/02, B41N 6/02, B32B 5/04

(54) **Haftklebebänder zur Verklebung von Druckplatten und Verfahren zu deren Herstellung**

(30) Priorität: 09.05.2008 DE 102008023021; 15.05.2008 DE 102008023741
(71) Anmelder: TESA SE, 20253 Hamburg (DE)
(72) Erfinder: Krawinkel, Thorsten Dr., 22457, Hamburg (DE); Ring, Christian, 21435, Stelle (DE); Ellringmann, Kai Dr., 22523, Hamburg (DE); Fiencke, Jochen, 22453, Hamburg (DE)

(57) **Zusammenfassung**

Die Erfindung betrifft die Verwendung einer Haftklebemasse umfassend zumindest eine Harz-Polymer-Abmischung aus mindestens 50 Gew.-% eines oder mehrerer Blockcopolymere enthaltend Polymerblöcke auf Basis von Vinylaromaten und enthaltend Polymerblöcke auf Basis von 1,3-Dienen und maximal 50 Gew.-% zumindest eines Klebharzes, für ein Klebeband zur Verklebung von flexiblen Druckplatten auf Druckzylindern oder Druckhülsen.

## Beschreibung

Die Erfindung betrifft Haftklebebänder umfassend zumindest eine Schicht einer Haftklebemasse, die ein sehr geringes Aufziehverhalten auf polaren Oberfläche besitzt, leicht repositionierbar ist und nach der Verklebung auf einem Druckzylinder ein geringes Kantenabheben der Druckplatte und des Verbundes aus Klischeeklebeband und Druckplatte aufweist, und die Verwendung derartiger Haftklebebänder zur Verklebung von Druckplatten.

In der Druckindustrie sind unterschiedliche Verfahren bekannt, um Motive mittels druckender Vorlagen auf beispielsweise Papier zu übertragen. Eine Möglichkeit besteht im so genannten Flexodruck. Eine Ausführungsform des Flexodrucks stellt nun wiederum die Verwendung mehrschichtiger Photopolymer-Druckplatten mit flexiblem Unterbau dar, wobei diese Art des Druckens schon seit längerer Zeit zum Stand der Technik zählt. Die Druckplatten bestehen dabei aus mehreren Schichten unterschiedlichen polymeren Materials mit jeweils speziellen Aufgaben. Zum Beispiel weisen die Druckplatten "nyloflex ACE" der Firma FlintGroup mindestens zwei Schichten auf, nämlich eine lichtempfindliche Reliefschicht und darunter eine Stabilisierungsfolie.

Im Flexodruckverfahren werden flexible Druckplatten auf Druckzylinder verklebt. Zur Verklebung werden in der Regel doppelseitige Haftklebebänder eingesetzt, an die sehr hohe Anforderungen gestellt werden. Für den Druckprozess muss das Haftklebeband eine bestimmte Härte aber auch eine bestimmte Elastizität aufweisen. Diese Eigenschaften müssen sehr genau eingestellt werden, damit das erzeugte Druckbild gemäß den Anforderungen das gewünschte Ergebnis liefert. Weitere hohe Anforderungen werden an die Haftklebemasse gestellt, da hier die Klebkraft ebenfalls ausreichend sein sollte, damit sich die Druckplatte nicht von dem doppelseitigen Haftklebeband oder das Haftklebeband vom Zylinder ablöst. Dies gilt auch bei erhöhten Temperaturen von 40-60 °C und bei höheren Druckgeschwindigkeiten. Neben dieser Eigenschaft muss die Haftklebemasse aber auch reversible Hafteigenschaften besitzen, da häufig Druckplatten verklebt und dann zur Repositionierung wieder abgelöst werden müssen, da die Druckplatten in der Regel mehrfach eingesetzt werden. Diese Ablösbarkeit sollte auch bei einer Verklebung über einen längeren Zeitraum (bis zu 6 Monate) gegeben sein; die Druckplatte sollte dabei zerstörungsfrei wiederabgelöst werden können. Zudem sollten keine Rückstände auf der Druckplatte und auf dem Zylinder verbleiben.

Zusammenfassend werden somit sehr hohe Anforderungen an die für diesen Einsatz geeigneten doppelseitigen Haftklebebänder gestellt.

In US 4,380,956 wird ein Prozess zur Fixierung einer Druckplatte für den Flexodruckprozess beschrieben. Für diesen Prozess werden auch Haftklebemassen eingesetzt, die aber nicht genauer spezifiziert wurden.

In GB 1,533,431 wird ein doppelseitiges Haftklebeband beansprucht, dass eine elastomere Schicht enthält, die wiederum durch fragile Luftblasen aufgeschäumt ist. Die Luftblasen werden unter Druck während der Flexodruckanwendung zerdrückt.

In US 4,574,697 werden doppelseitige Haftklebebänder beansprucht, die als Trägermaterial einen flexiblen Polyurethanschaum aufweisen, der auf einer PET-Folie (Polyethylenterephthalat) fixiert ist. Die äußeren Schichten bestehen aus Haftklebemassen.

Das beschriebene Haftklebeband soll reversibel sein und sich von dem Druckzylinder und von der Druckplatte entfernen lassen. Ein ähnlicher Produktaufbau wurde in EP 0206760 beschrieben. Hier wurde als flexibler Schaumträger ein Polyethylenschaum eingesetzt.

In US 4,574,712 wird in Analogie zu US 4,574,697 ein ähnlicher Haftklebebandaufbau beschrieben. Bezüglich der Haftklebemassen findet hier die Einschränkung statt, dass die Klebkraft zu der Druckplatte und zu dem Druckzylinder kleiner sein sollte als zu der Trägerfolie und dem Trägerschaum.

In US 3,983,287 wird ein Laminat beschrieben, das als Trägermaterial ein nicht kompressibles Elastomer enthält. Die Kompressibilität wird durch Kugeln erreicht, die unter Druck zerstört werden und somit eine Flexibilität erzeugen. In US 5,613,942 werden Haftklebebänder beschrieben, die besonders geeignet für Verklebungen auf feuchten Oberflächen sind. Es wird auch erwähnt, dass solche Haftklebebänder zur Verklebung von Druckplatten geeignet sind.

In US 5,476,712 wird ebenfalls ein doppelseitiges Haftklebeband beschrieben, das im Flexodruckverfahren eingesetzt wird. Dieses Haftklebeband enthält wiederum ein thermoplastisches Elastomer, wobei hier eine zellförmige Struktur vorliegt, die durch expandierende Mikropartikel erzeugt wird.

In den oben genannten Fällen werden sehr viele unterschiedliche Haftklebemassen eingesetzt. Naturkautschukklebemassen besitzen gute klebrige Eigenschaften sind aber nicht sehr scherfest bei Raumtemperatur und altern durch den Abbau über die im Polymer enthaltenden Doppelbindungen.

Typischerweise werden für die Verklebung von Druckplatten (im Folgenden auch als "Klischees" bezeichnet) auf Druckzylindern Klebmassen auf Basis von Acrylat eingesetzt. Diese haben den Vorteil, dass sie eine hohe Anfassklebrigkeit besitzen und leicht wieder demontiert werden können. Allerdings neigen diese Klebmassen verstärkt zum Kantenabheben.
Im Markt gibt es auch Klebebänder auf Basis von Styrolblockcopolymeren für diese Anwendung, auch diese Klebebänder zeigen aber ein starkes Kantenabheben, besonders bei Verwendung von dicken Klischees von 2,54 mm Dicke, die besonders bei langandauernden Druckvorgängen eingesetzt werden. Das Kantenabheben nimmt mit der Dicke und Steifheit der Druckklischees zu.

Das Phänomen des Kantenabhebens ist ein für fast alle gängigen im Markt befindlichen Druckplatten-Verklebungsbänder bekanntes Problem und resultiert daraus, dass die flexiblen Druckplatten nach der Verklebung auf einen Druckzylinder - und der dabei zwangsläufig erfolgten Verformung - ein Rückstellbestreben in die ebene Fläche aufweisen. Das Kantenabhebebestreben ist unter anderem vom Zylinderdurchmesser, von der Druckplattendicke und deren Beschaffenheit, vom Vorhandensein eines nicht zum Drucken verwendeten Druckplattenrandes (der dann dünner ist und geringere Rückstellkräfte aufweist), vom Druckdesign am Plattenrand (ist die Druckplatte vollflächig bedruckt, so hat die Druckplatte üblicherweise die höchsten Rückstellkräfte), von der reinigung der Druckplattenrückseite vor der Montage auf den Zylinder, vom Andruck der Platten bei der Verklebung und von weiteren Parametern abhängig.
Bei gleichzeitigem Einsatz mehrerer Druckplatten werden die Anforderungen an den Spalt zwischen den üblicherweise nahtlos verklebten Druckplatten immer größer, insbesondere wenn großflächige Drucke erzeugt werden sollen, bei denen der Übergang nicht zu sehen sein soll. Der Flexodruck (also der Druck mittels Druckplatten) geht immer mehr in Konkurrenz zu anderen Verfahren wie beispielsweise dem Tiefdruck, sio dass die vorgenannten Anforderungen an Bedeutung gewinnen. Neben der Tatsache, dass der Spalt immer kleiner (für das Druckbild weniger erkennbar) werden muss, ist auch die Möglichkeit des Belassens eines nicht-druckenden Randes nicht mehr gegeben.
Die Drucker versuchen dieser Problematik derzeit dadurch Herr zu werden, dass sie Druckverfahren mit mehreren Arbeitsschritten durchführen, was aber mit einem erheblichen Aufwand und mit zusätzlichen Kosten verbunden ist.

Aufgabe der Erfindung ist es, hier Abhilfe zu schaffen und ein Klebeband bereitzustellen, das kein Kantenabheben auch nach längerer Lagerung unter leicht erhöhten Temperaturen zeigt, sich leicht wieder ablösen lässt und idealerweise auch eine gute Repositionierbarkeit ermöglicht.
Gelöst wird diese Aufgabe überraschenderweise wie im Hauptanspruch beschrieben.
Eingesetzt wird eine Klebmasse, umfassend eine Polymer-Harz-Abmischung mit einem hohen Anteil an Blockcopolymeren, insbesondere von über 50 Gew.-%, und einem geringen Harzanteil, wobei die Blockcopolymere solche auf der Basis von Vinylaromaten sind.

Die Klebemasse kann im einfachsten Fall durch die Polymer-Harz-Abmischung allein realisiert sein, in Weiterentwicklungen der erfindungsgemäßen Klebemasse können aber auch weitere Additive und Zusatzstoffe zugegeben sein.

Diese Klebmassen besitzen eine nur mäßige Klebkraft, neigen aber nicht zum Aufziehen auf den Untergrund und sind somit leicht wieder repositionierbar. Überraschenderweise zeigen Klebebänder ausgerüstet mit einer erfindungsgemäßen Klebmasse kein oder nur ein sehr geringes Kantenabheben.

Als Haftklebemassen finden solche auf Basis von Blockcopolymeren enthaltend Polymerblöcke gebildet von Vinylaromaten (A-Blöcke), wie zum Beispiel Styrol, und solchen gebildet durch Polymerisation von 1,3-Dienen (B-Blöcke), wie zum Beispiel Butadien und Isopren oder einem Copolymer aus Butadien und Isopren, Anwendung. Vorteilhaft können auch Mischungen unterschiedlicher Blockcopolymere zum Einsatz kommen. Weiter vorteilhaft können Produkte, die zum Teil oder vollständig hydriert sind, eingesetzt werden.

Die eingesetzten Blockcopolymere können insbesondere lineare A-B-A Struktur aufweisen. Einsetzbar sind ebenfalls Blockcopolymere von radialer Gestalt sowie sternförmige und lineare Multiblockcopolymere. Als weitere Komponente können A-B-Zweiblockcopolymere eingesetzt werden. Erfindungsgemäß lassen sich hervorragend auch Mischungen von Blockcopolymeren unterschiedlicher Aufbauten einsetzen.

Vorzugsweise werden solche Blockcopolymere eingesetzt, die einen Polyvinylaromatengehalt von mindestens Gew.-20 % besitzen.

Als besonders hervorragend lassen sich Styrol-Isopren-Styrol-Blockcopolymere (SIS) und/oder Styrol-Butadien-Styrol-Blockcopolymere als Polymerkompente der erfindungsgemäß eingesetzten Haftklebemasse verwenden.

Als Klebrigmacher dienen Klebharze, die mit dem Elastomerblock der Vinylaromatenblockcopolymere verträglich sind. Geeignete Klebharze sind u.a. nicht hydrierte, partiell oder vollständig hydrierte Harze auf Basis von Kolophonium oder Kolophoniumderivaten, hydrierte oder nicht hydrierte Polymerisate des Dicyclopentadiens, nicht hydrierte, partiell, selektiv oder vollständig hydrierte Kohlenwasserstoffharze auf Basis von C-5, C-5/C-9 oder C-9 Monomerströmen, und/oder hydrierte oder nicht hydrierte Polyterpenharze auf Basis von α-Pinen und/oder β-Pinen und/oder δ-Limonen. Vorgenannte Klebharze können sowohl allein als auch im Gemisch eingesetzt werden.

Die Einsatzkonzentrationen für das Blockcopolymer liegen über 50 Gew.-% bis 75%, insbesondere im Bereich zwischen 55 Gew.-% und 65 Gew.-%, jeweils bezogen auf die Harz-Polymer-Abmischung. Entsprechend vorteilhaft werden die Harze bevorzugt in einem Anteil von 25 bis 50 Gew.-%, sehr bevorzugt in einem Anteil von 35 bis 45 Gew.-% gewählt.

Als weitere Additive für die Haftklebemassen sind insbesondere die folgenden Verbindungen hervorragend einsetzbar:
- primäre Antioxidanzien, wie zum Beispiel sterisch gehinderte Phenole
- sekundäre Antioxidanzien, wie zum Beispiel Phosphite oder Thioether
- Prozessstabilisatoren, wie zum Beispiel C-Radikalfänger
- Lichtschutzmittel, wie zum Beispiel UV-Absorber oder sterisch gehinderte Amine
- Verarbeitungshilfsmittel
- Endblockverstärkerharze sowie
- gegebenenfalls weitere Polymere von bevorzugt elastomerer Natur; entsprechend nutzbare Elastomere beinhalten unter anderem solche auf Basis reiner Kohlenwasserstoffe, zum Beispiel ungesättigte Polydiene, wie natürliches oder synthetisch erzeugtes Polyisopren oder Polybutadien, chemisch im wesentlichen gesättigte Elastomere, wie zum Beispiel gesättigte Ethylen-Propylen-Copolymere, α-Olefincopolymere, Polyisobutylen, Butylkautschuk, Ethylen-Propylenkautschuk sowie chemisch funktionalisierte Kohlenwasserstoffe, wie zum Beispiel halogenhaltige, acrylathaltige oder vinyletherhaltige Polyolefine, um nur einige wenige zu nennen
- anorganische Füllstoffe, wie z.B. Kreide und/oder Silikate.

Die erfindungsgemäßen Haftklebesysteme zeichnen sich dadurch aus, dass sie das genannte Anforderungsprofil erfüllen und insbesondere folgende Vorteile aufweisen:
- vielfache Wiederverwendbarkeit (Repositionierbarkeit) der Haftklebebänder,
- Reversibilität auf verschiedenen Oberflächen,
- rückstandsfreie Wiederablösbarkeit vom Substrat,
- geringes Aufziehen auch auf polaren Oberfläche,
- minimiertes bzw. überhaupt kein Kantenabheben nach der Verklebung auf dem Druckzylinder.

In einer vorteilhaften Ausgestaltung des erfindungsgemäßen Klebebandes ist dieses zumindest aus einer Trägerschicht und jeweils aus einer Haftklebemassenschicht auf beiden Seiten der Trägerschicht aufgebaut.

Insbesondere ist der Träger des erfindungsgemäßen Klebebandes eine Folie, ein Schaumstoff oder ein Verbund aus mehreren Folien, mehreren Schaumstoffen oder aus zumindest einer Folie und zumindest einem Schaumstoff, wobei auf dem entsprechenden Träger oder Verbund beidseitig selbstklebende Beschichtungen aufgebracht sind, wobei zumindest die Seite zur Druckplatte mit der erfindungsgemäßen Haftklebemasse ausgerüstet ist. Vorteilhaft kann für beide Haftklebemassenschichten die erfindungsgemäße Haftklebemasse eingesetzt werden.

Erfindungsgemäß hervorragend geeignet ist ein doppelseitiges Klebeband, welches einen geschäumten Träger, eine Polymerfolie auf der einen Seite des geschäumten Trägers sowie jeweils eine Schicht einer Haftklebemasse auf beiden Seiten des Klebebandes umfasst, wobei zumindest eine der außenliegenden Haftklebemassenschichten eine erfindungsgemäße, vernetzte Haftklebemasse ist, wobei aber insbesondere beide Haftklebemassenschichten erfindungsgemäße Haftklebemassen sind.

Wird ein Verbund aus zumindest einer Folie und zumindest einem geschäumten Material ("Schaumstoff") als Träger eingesetzt, so können diese Trägerschichten in einer vorteilhaften Vorgehensweise durch eine Klebemasse zusammenlaminiert sein und somit einen Trägerverbund ergeben. In einer weiteren Ausgestaltung können die Schichten durch Heißsiegelung miteinander verbunden werden. Zur Herstellung des Trägerverbundes können aber auch die sonstigen fachbekannten Methoden zum flächigen Verbinden zweier Schichten, insbesondere polymerer Natur, eingesetzt werden.

Auf der zum Druckzylinder gerichteten Seite des Haftklebebandes kann vorteilhaft die erfindungsgemäße Haftklebemasse eingesetzt werden, grundsätzlich können hier aber auch andere dem Fachmann bekannten Haftklebemassen eingesetzt werden. So eignen sich beispielsweise kautschukbasierende Haftklebemassen, Synthesekautschuk-Haftklebemassen, Haftklebemassen auf Basis von Polysilikonen, Polyurethanen, Polyolefinen oder Polyacrylaten.

Als Folienträger können die dem Fachmann geläufigen Materialien eingesetzt werden, insbesondere Polyester, Polyethylenterephthalat (PET), Polyethylen (PE), Polypropylen (PP), Biaxial orientiertes Polypropylen (BOPP), Polyvinylchlorid (PVC) etc. Diese Aufzählung ist nicht abschließend zu verstehen. Besonders bevorzugt wird eine Folie aus Polyethylenterephthalat eingesetzt.

Als Schaumträger eignen sich insbesondere vorteilhaft Polymerschäume, wobei die Trägerschäume zum Beispiel aus Polyolefinen, insbesondere Polyethylen oder Polypropylen, aus Polyurethanen oder aus Polyvinylchlorid bestehen.

Werden Schäume als Trägermaterialien eingesetzt, ist es insbesondere vorteilhaft, weiterhin zumindest einen stabilisierenden Träger auf zumindest einer Seite des geschäumten Trägers vorzusehen, so dass ein wie vorstehend dargestellter Trägerverbundes vorliegt. Der stabilisierende Träger kann insbesondere ein Papier oder eine Folie sein, insbesondere eine Folie aus Polyester, Polyethylenterephthalat, Polyethylen, Polypropylen, Biaxial orientiertes Polypropylen oder Poylvinylchlorid.
In vorteilhafter Weise kann auf beiden Seiten des Schaumträgers ein stabilisierender Träger vorgesehen sein.

Generell kann durch eine Aufrauung des Trägermaterials eine Verbesserung der Haftklebemassenverankerung vorgenommen werden. Ein Weg zur Aufrauung und zur chemischen Modifizierung der Polymerstruktur verläuft über die nasschemische Ätzung des Trägermaterials. Neben der Ätzung kann auch auf andere Weise vorbehandelt werden.

So lassen sich die Trägermaterialien zur Verbesserung der Verankerung physikalisch und chemisch vorbehandeln. Zur physikalischen Behandlung wird die Folie bevorzugt mit Flamme oder Corona oder Plasma behandelt. Für die chemische Vorbehandlung wird das Trägermaterial mit Vorstrich versehen, wobei in einer besonders bevorzugten Auslegung Reaktiv-Vorstriche verwendet werden. Als Vorstrichmaterialien eignen sich z.B. Reaktivprimer.

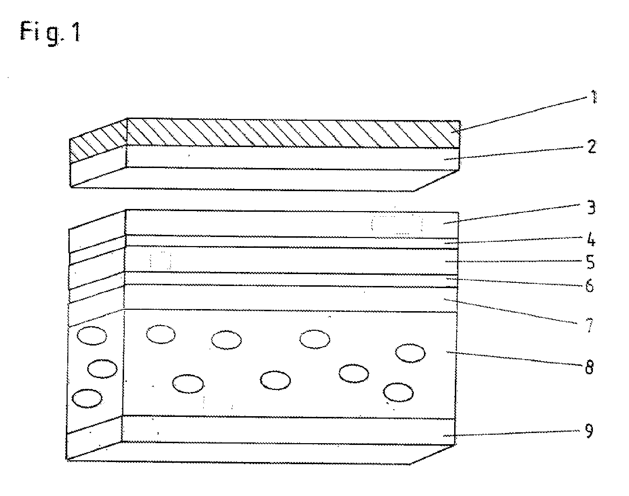

Für die Verwendung als doppelseitiges Haftklebeband zur Verklebung von Druckplatten besitzt das Haftklebeband in einer besonders bevorzugten Auslegung der Erfindung den Produktaufbau in Figur 1.

Das Klebeband dient zum Verkleben eines Klischees, das sich aus einer PET-Folie 2 und einer Schicht eines Fotopolymers 1 zusammensetzt.
Die Schichten 3 bis 9 bilden ein doppelseitig klebend ausgerüstetes Klischeeklebeband, das dank seines geschäumten Trägers 8 kompressibel und elastisch ist.
Beginnend von der Seite, mittels derer das Klischee verklebt wird, besteht das Klebeband aus folgenden einzelnen Abschnitten:

| | |
|---|---|
| 3 | Haftklebemasse zur Verankerung des Klischees |
| 4 | Die aufgeraute obere Oberfläche der PET-Folie 5 |
| 5 | Folie aus Polyethylenterephthalat (PET) |
| 6 | Die aufgeraute untere Oberfläche der PET-Folie 5 |
| 7 | Haftklebemasse zur Verankerung des geschäumten Trägers 8 auf der Folie aus |
| | Polyethylenterephthalat (PET) 5 |
| 8 | geschäumter Träger |
| 9 | Haftklebemasse zur Verankerung auf dem Druckzylinder; |

Gerade in der Druckindustrie ist es von Bedeutung, dass die hier eingesetzten Klebebänder eine hohe Flexibilität aufweisen, also ihre Dicke in gewissem Maße bei Druckanwendung verändern können beziehungsweise nach Wegnahme der Belastung wieder ihre ursprüngliche Form annehmen können.

Vorteilhaft ist darüber hinaus, wenn der geschäumte Träger 8 aus Polyolefin(en), Polyvinylchlorid (PVC) oder Polyurethan (PU) besteht. In einer besonders bevorzugten Auslegung werden geschäumte Polyethylene und Polypropylene eingesetzt. Weiter bevorzugt ist, wenn die Oberflächen des geschäumten Trägers physikalisch vorbehandelt sind, insbesondere Corona-vorbehandelt.

Weiter vorzugsweise hat die Folie aus Polyethylenterephthalat (PET) eine Dicke von 5 µm bis 500 µm, bevorzugt 5 µm bis 60 µm.

Weiterhin kann das erfindungsgemäße Klebeband ein- oder beidseitig mit einer Abdeckung aus Papier oder aus einer entsprechenden Folie, insbesondere einem beidseitig silikonisierten Papier oder einer beidseitig silikonisierten Folie oder einer Silikonfolie, versehen sein, um ein längeres Lagern und eine bequeme Handhabung während des Gebrauchs zu gewährleisten.

Aufgrund seiner speziellen Eigenschaften lässt sich das erfindungsgemäße beidseitig klebend ausgerüstete Klebeband hervorragend zur Fixierung von Druckplatten, insbesondere von mehrschichtigen Photopolymer-Druckplatten auf Druckzylindern oder Sleeves einsetzen.

Das erfindungsgemäße Klebeband ist aufgrund seiner besonderen Ausführung besonders mit den auf die Druckplatte abgestimmten Klebkräften hervorragend geeignet, die Druckplatten auf den Druckzylindern zu verkleben. Einerseits ist es möglich, die Druckplatten mehrfach vor Druckbeginn zu repositionieren, andererseits aber ist eine feste Verklebung der Platte während des Druckvorganges gewährleistet.

Die mit dem mit der erfindungsgemäßen Haftklebemasse ausgerüstetem Haftklebeband verklebte Druckplatte lässt sich vom Haftklebeband ohne irgendeine Beschädigung, insbesondere auch rückstandsfrei, entfernen.

Ein Abschälen der Trägerschicht der Platte oder die Bildung von unerwünschten Falten in der Platte während des Entfernens treten nicht auf. Auch nach dem Entfernen des Klebebands von dem Druckzylinder verbleiben keine Rückstände.

Das erfindungsgemäße Klebeband ist ebenso hervorragend zur Verklebung von flexiblen Druckplatten auf Druckhülsen geeignet.

### Experimente:

Im Folgenden werden die Vorteile des erfindungsgemäßen Klebebands in mehreren Versuchen beschrieben. Folgende Testmethoden wurden dabei angewendet, um die klebtechnischen Eigenschaften der hergestellten Haftklebemassen zu evaluieren.

### Testmethoden:

### Klebkraft

Die Prüfung der Schälfestigkeit (Klebkraft) erfolgte gemäß PSTC-1. Auf eine 23 µm dicke PET-Folie wird eine Haftklebeschicht mit 30 g/m² aufgebracht.
Ein 2 cm breiter Streifen dieses Musters wird auf eine Stahlplatte durch dreimaliges doppeltes Überrollen mittels einer 2 kg Rolle verklebt. Die Platte wird eingespannt und der Haftklebestreifen über sein freies Ende an einer Zugprüfmaschine unter einem Schälwinkel von 180° mit einer Geschwindigkeit von 300 mm/min abgezogen.
Dabei wird die Klebkraft zum einen direkt nach der Verklebung, zum anderen nach einer Lagerung bei Raumtemperatur über 72 h gemessen.
Die Bestimmung der Klebkraft auf Polyethylen wurde wie folgt durchgeführt: Als definierter Haftgrund (Klebkraftplatte) wurde eine Polyethylen-Platte eingesetzt, die als Prüfplatte im Spritzgussverfahren aus HDPE-Granulat Hostalen GC7260 Firma Basell hergestellt worden war. Vor einer Messung wurde diese Platte mit Ethanol gereinigt. Als zu untersuchende Probe wurde ein Standardpolyesterträger mit einer Stärke von 23 µm mit der jeweiligen Selbstklebemasse einseitig beschichtet (Selbstklebemassenauftrag: 50 g/m²). Ein 20 mm breiter Streifen des beschichteten Standardpolyesterträgers wurde unter Belastung (2 kg) auf den Haftgrund aufgedrückt. Unmittelbar im Anschluss daran wurde das Klebeband in einem Winkel von 180 ° vom Substrat mit einer Geschwindigkeit von 300 mm/min abgezogen und die hierfür bei Raumtemperatur benötigte Kraft gemessen. Der Messwert (in N/cm) ergab sich als Mittelwert aus drei Einzelmessungen. Zur Kalibrierung des Messverfahrens wurde ein kommerzielles Testklebeband zur Prüfung von nichtklebenden Beschichtungen (Typ "tesa 7475" der tesa AG; Klebkraft auf Stahl laut Spezifikation: 31,25 N/25 mm) entsprechend diesem Messverfahren untersucht; die hierbei ermittelte Klebkraft auf der Polyethylen-Prüfplatte betrug 4,5 N/cm.

### Kantenabheben:

Es wurden Druckzylinder aus Stahl mit einem doppelseitigen Klebeband versehen, das einem Aufbau nach Figur 1 entsprach, wobei als Stabilisierungsfolie eine geätzte PET-Folie von 23 µm eingesetzt wurde und als Schaum ein 500 µm PE-EVA-Schaum (Polyethylen-Ethylvinylacetet) mit einem Raumgewicht von 270 kg/m³. Als Klebmasse auf beiden Seiten, also sowohl zum Stahlzylinder als auch zum Klischee, wurde die jeweilige Masse aus den Beispielen B1 bis B5, C6, C7 in einer Dicke von 30 g/m² verwendet.

Auf die außenliegende, erfindungsgemäße Klebmassenschicht (Bezugsziffer 3 in Figur 1) des auf den Stahlzylinder applizierten Klebebandes (Klebevermittlung des Klebebandes zum Druckzylinder mittels der Klebmasse 9 in Figur 1) wurde nach Entfernen des Trennpapiers eine Druckplatte der Fa. DuPont Cyrel HOS mit einer Dicke von 2,54 mm verklebt.
Die Muster wurden im verklebten Zustand 3 Tage bei Raumtemperatur stehen gelassen. Anschließend wurde das Kantenabheben in mm gemessen.

### Ablösbarkeit:

Die oben beschriebenen verklebten Druckplatten wurden nach 3 Tagen Aufziehzeit von Hand abgezogen und die Ablösbarkeit subjektiv beobachtet, wobei für die Ablösbarkeit die Kategorien leicht, akzeptabel, schwer und sehr schwer gefunden wurden.

### Probenbereitung

Die Herstellung und Verarbeitung der Haftklebemassen kann aus Lösung, Dispersion sowie aus der Schmelze erfolgen. Bevorzugte Herstell- und Verarbeitungsverfahren erfolgen aus Lösung sowie aus der Schmelze.

### Herstellung der Muster:

Die Bestandteile werden in einer Mischung aus Toluol und Benzin 50:50 gelöst, so dass ein Feststoffgehalt von 40 % entsteht. Die Muster werden dann auf einer 23 µm dicken geätzten PET-Folie so ausgestrichen und bei 100 °C getrocknet, dass ein Flächengewicht von 30 g/cm² Klebmasse verbleibt.

Allen Beispielen wurden als Alterungsschutzmittel 0,5 Teile Irganox® 1010 und 0,5 Teile Tinuvin® P als UV-Absorber zugesetzt.

Zusammensetzung der Beispiele siehe Tabelle 1 (alle Angaben in Gew.-%).

**Tabelle1 :**

| | B1 | B2 | B3 | B4 | B5 | C6 |
|---|---|---|---|---|---|---|
| Kraton® D 1165 | 55 | | | | | |
| Kraton® D 1118 | | 30 | | 20 | 20 | 15 |
| Kraton® D 1102 | | 30 | 60 | | 40 | 30 |
| Kraton® D 1101 | | | | 40 | | |
| Pentalyn® H-E | 35 | 35 | | | | 45 |
| Regalite® R 1090 | | | 40 | | 35 | |
| Dercolyte® A 115 | | | | 30 | | |
| Picco® A 10 | 10 | | | | | 10 |
| Foralyn® 5020 | | 5 | | | | |
| Wingtack® 10 | | | | 10 | | |
| Shellflex® 371 | | | | | 5 | |

| Eigenschaften der eingesetzten Rohstoffe: | |
|---|---|
| Kraton® D 1165 | SIS, ca. 16 Gew.-% Zweiblock, Blockpolystyrolgehalt: 30 Gew.-%, |
| | Kraton Polymers |
| Kraton® D 1118 | SBS, ca. 76 Gew.-% Zweiblock, Blockpolystyrolgehalt: 31 Gew.-%, |
| | Kraton Polymers |
| Kraton® D 1102 | SBS, ca. 14 Gew.-% Zweiblock, Blockpolystyrolgehalt: 30 Gew.-%, |
| | Kraton Polymers |
| Kraton® D 1101 | SBS, ca. 18 Gew.-% Zweiblock, Blockpolystyrolgehalt: 31 Gew.-%, |
| | Kraton Polymers, höheres Molekulargewicht als Kraton D 1102 |
| Pentalyn® H-E | hydrierter Kolophoniumester, Erweichungspunkt (Ring & Ball) ca. |
| | 110 °C, Eastman |
| Regalite® R 1090 | hydriertes Kohlenwaserstoffharz auf C-9-Basis, Erweichungspunkt |
| | (Ring & Ball) ca. 90 °C, Exxon Mobile |
| Dercolyte® A 115 | Alpha-Pinenharz, Erweichungstemperatur: ca. 115 °C, DRT |
| Picco® A 10 | flüssiges Kohlenwasserstoffharz, Eastman |
| Foralyn® 5020 | flüssiges Kolophoniumharz, Eastman |
| Wingtack® 10 | flüssiges Kohlenwasserstoffharz, Goodyear |
| Shellflex® 371 | naphthenisches Öl, Shell |
| Irganox® 1010 | sterisch gehindertes Phenol; Ciba Additive |
| Tinuvin® P | UV-Absorber, Ciba Additive |

Die Messung der Erweichungspunkte erfolgte analog der DIN EN 1427:2007 mit dem zu untersuchenden Harz statt Bitumen.

### Beispiel C7

Ein für radikalische Polymerisationen konventioneller 2 L-Glasreaktor wurde mit 8 g Acrylsäure, 372 g 2-Ethylhexylacrylat, 20 g Isobornylacrylat und 170 g Aceton: Siedegrenzenbenzin 60/95 (1:1) befüllt. Nach 45 Minuten Durchleiten von Stickstoffgas unter Rühren wurde der Reaktor auf 58 °C hochgeheizt und 0,2 g Azoisobutyronitril (AIBN, Vazo® 64, Fa. DuPont) gelöst in 10 g Aceton hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,2 g AIBN gelöst in 10 g Aceton hinzugegeben. Nach 5 Stunden Reaktionszeit wurden 0.8 g Bis-(4-tert. Butylcyciohexanyl)-Peroxy-dicarbonat (Perkadox® 16, Fa Akzo Nobel) gelöst in 10 g Aceton hinzugegeben. Nach 6 Stunden wurde mit 100 g Siedegrenzenbenzin 60/95 verdünnt. Nach 7 Stunden Reaktionszeit wurden 0,8 g Bis-(4-tert.-Butylcyciohexanyl) Peroxydicarbonat (Perkadox® 16, Fa Akzo Nobel) gelöst in 10 g Aceton hinzugegeben.

Nach 10 Stunden wurde mit 150 g Siedegrenzenbenzin 60/95 verdünnt. Die Reaktion wurde nach 24 h Reaktionszeit abgebrochen und auf Raumtemperatur abgekühlt. Anschließend wurde das Polyacrylat mit 0.6 Gew.-% Aluminiumacetylacetonat (3 %ige Lösung in Aceton) abgemischt, auf einen Feststoffgehalt von 30 % mit Siedegrenzenbenzin 60/95 verdünnt und dann aus Lösung auf eine PET-Folie beschichtet. Nach Trocknung für 30 Minuten bei 120 °C betrug der Masseauftrag 30 g/m²_{.}

Bei den beispielhaften Haftklebestreifen wurden die folgenden klebtechnischen Daten ermittelt:

| Haftklebemasse Beispiel Nr. | Klebkraft Stahl sofort in N/cm | Klebkraft Stahl nach 72h in N/cm | Klebkraft PE in N/cm | Scherstandzeit bei Raumtemperatur in min | Kantenabheben in mm | Ablösbarkeit |
|---|---|---|---|---|---|---|
| B1 | 5,8 | 6,3 | 4,1 | > 10.000 | 0 | Akzeptabel |
| B2 | 6,2 | 6,5 | 3,8 | > 10.000 | 0 | Leichtakzeptabel |
| B3 | 5,3 | 5,7 | 3,4 | > 10.000 | 0 | Leichtakzeptabel |
| B4 | 5,9 | 6,5 | 3,8 | > 10.000 | 0 | Leicht |
| B5 | 4,8 | 5,2 | 3,1 | > 10.000 | 0 | leicht |
| C6 | 8,2 | 9,3 | 4,9 | > 10.000 | 0 | Sehr schwer |
| C7 | 2,2 | 3,1 | | | 55 | leicht |

Man erkennt, dass die Klebmasse auf Basis von Acrylat (C7) zwar leicht ablösbar ist, aber auch ein starkes Kantenabheben zeigt.
Die Klebmasse mit der geringen Menge an Vinylaromatenblockcopolymer (C6) besitzt zwar eine hohe Klebkraft und zeigt kein Kantenabheben, ist aber nur sehr schwer, bei größeren Klischees gar nicht mehr ablösbar.
Bei einem hohen Anteil an Elastomer (Vinylaromatenblockcopolymer), insbesondere von über 50 Gew.% (bezogen auf die Harz-Blockcopolymer-Mischung) zeigt sich ebenfalls kein Kantenabheben, trotzdem lassen sich die Klischees deutlich leichter nach Gebrauch wieder rückstandsfrei entfernen, vergleiche hierzu die erfindungsgemäßen Beispiele B1 bis B5.

## Patentansprüche

1. Verwendung einer Haftklebemasse umfassend
zumindest eine Harz-Polymer-Abmischung aus mindestens 50 Gew.-% eines oder mehrerer Blockcopolymere enthaltend Polymerblöcke auf Basis von Vinylaromaten und enthaltend Polymerblöcke auf Basis von 1,3-Dienen und maximal 50 Gew-% zumindest eines Klebharzes,
für ein Klebeband zur Verklebung von flexiblen Druckplatten auf Druckzylindern oder Druckhülsen.

2. Doppelseitiges Klebeband, umfassend zumindest einen geschäumten Träger, zumindest eine Polymerfolie auf der einen Seite des geschäumten Trägers sowie jeweils eine Schicht einer Haftklebemasse auf beiden Seiten des Klebebandes,
**dadurch gekennzeichnet, dass**
zumindest eine der außenliegenden Haftklebemassenschichten eine solche Masse umfassend
zumindest eine Harz-Polymer-Abmischung aus zumindest 50 Gew.-% eines oder mehrerer Blockcopolymere enthaltend Polymerblöcke auf Basis von Vinylaromaten und enthaltend Polymerblöcke auf Basis von 1,3-Dienen
und maximal 50 Gew.-% zumindest eines Klebharzes ist.

3. Klebeband nach Anspruch 2, **dadurch gekennzeichnet, dass** der Blockcopolymer-Anteil in der Harz-Polymer-Abmischung 55 bis 65 Gew.-% beträgt.

4. Klebeband nach einem der Ansprüche 2 oder 3, **dadurch gekennzeichnet, dass** der Harzanteil in der Harz-Polymer-Abmischung 35 bis 45 Gew.-% beträgt.

5. Klebeband nach einem der Ansprüche 2 bis 4, **dadurch gekennzeichnet, dass**
die Harze solche auf Basis von Kolophonium oder Kolophoniumderivaten, hydrierte oder nicht hydrierte Polymerisate des Dicyclopentadiens, nicht hydrierte, partiell, selektiv oder vollständig hydrierte Kohlenwasserstoffharze auf Basis von C-5, C-5/C-9 oder C-9 Monomerströmen, hydrierte oder nicht hydrierte Polyterpenharze auf Basis von α-Pinen und/oder β-Pinen und/oder δ-Limonen sind.

6. Klebeband nach einem der Ansprüche 2 bis 5, **dadurch gekennzeichnet, dass**
die Blockcopolymere einen Polyvinylaromatengehalt von mindestens 20 Gew.-% besitzen.

7. Klebeband nach einem der Ansprüche 2 bis 6, **dadurch gekennzeichnet, dass** als Vinylaromat Styrol eingesetzt wird.

8. Klebeband nach einem der Ansprüche 2 bis 7, **dadurch gekennzeichnet, dass** als 1,3-Diene Butadien und/oder Isopren eingesetzt werden.

9. Verwendung eines Klebebandes nach einem der Ansprüche 2 bis 8 zur Verklebung von flexiblen Druckplatten auf Druckzylindern oder Druckhülsen.
